# EUROPEAN PATENT SPECIFICATION

(11) **EP 1 962 464 B1**
(45) Date of publication and mention of the grant of the patent: **18.01.2012**
(21) Application number: 06791270.9
(22) Date of filing: 19.10.2006
(51) Int. Cl.: H04L 29/12, H04L 29/06

(54) **METHOD, COMMUNICATION SYSTEM AND ENTITY FOR OVERLAP CODE SENDING USING SESSION INITIATION PROTOCOL**
VERFAHREN, KOMMUNIKATIONSSYSTEM UND ENTITÄT ZUR ÜBERLAPPUNGSCODESENDUNG UNTER VERWENDUNG EINES SITZUNGSEINLEITUNGSPROTOKOLLS
PROCÉDÉ, SYSTÈME DE COMMUNICATION ET ENTITÉ POUR ENVOI DE CODE DE CHEVAUCHEMENT AU MOYEN D'UN PROTOCOLE D'OUVERTURE DE SESSION

(30) Priority: 14.12.2005 CN 200510120876
(43) Date of publication of application: 27.08.2008
(73) Proprietor: Huawei Technologies Co., Ltd., Longgang District, Shenzhen Guangdong 518129 (CN)
(72) Inventor: MA, Hongwei, Shenzhen, Guangdong 518129 (CN)
(74) Representative: Casalonga, Axel
(86) International application number: PCT/CN2006/002771
(87) International publication number: WO 2007/068179

(56) References cited:
- CN-A- 1 549 573
- KR-A- 20020 021 854
- US-A1- 2003 007 483
- US-B1- 6 256 294
- G. CAMARILLO ,A. B. ROACH ,J. PETERSON ,L. ONG: "Mapping of Integrated Services Digital Network (ISDN) User Part (ISUP) Overlap Signalling to the Session Initiation Protocol (SIP)" IETF STANDARD, INTERNET ENGINEERING TASK FORCE, IETF, CH, [Online] August 2003 (2003-08), XP002528629 Retrieved from the Internet: URL:http://www.rfc-editor.org/rfc/rfc3578. txt> [retrieved on 2009-05-19]

## Description

This application claims a priority of the Chinese Patent Application No. 200510120876.0, filed with the Chinese Patent Office on December 04, 2005 and entitled "Method for Overlap Sending Based on SIP", the contents of which are incorporated herein by reference in their entirety.

### Field of the Invention

The present invention relates to a system and method for transmitting calls between networks based on different communication protocols, and in particular, to a method, communication system and entity for overlap sending based on the Session Initiation Protocol (SIP).

### Background of the Invention

With the continuous development of computer and communication technologies, more and more operators and equipment manufacturers accept bearing of voice, data and images on a public packet switched network. The trend of such services and network convergence gives rise to a next generation network (NON). The NGN adopts a distributed network structure in the packet switched network to bear voice, data and multimedia services effectively.

As a core technology of the NGN, the softswitch attracts more and more attention. As a control function module in the NGN, the softswitch provides call control and connection control functions for real-time services of the NGN. SIP is a session control protocol formulated by the IETF, and is a prevailing session control protocol for the NGN at present. SIP is responsible for setting up and managing session connections between two or more users. The session may be an Internet multimedia conference, an Internet call or a multimedia information stream allocation. SIP sets up a session by sending an INVITE message.

Overlap sending is widely applied in the network. For example, mature mechanisms of overlapped sending exist in protocols of H.248, the Integrated Services Digital Network User Part (ISUP) and Telephone User Part (TUP). The H.248 is a gateway control protocol between a media gateway (MG) and a media gateway controller (MGC). The digits dialed by a user under the MG may be reported to the MGC in the overlap mode as defined by H.248, and this is overlap sending on the user side. ISUP/TUP supports overlap sending between two switches, that is, overlap sending on the network side. However, if an initial SIP INVITE request carries only part of initial digits and the digits are incomplete, SIP does not know how to send the subsequent digits. Consequently, the called number may be not connected correctly due to number incompleteness. Therefore, problems occur when SIP is interoperated with such protocols.

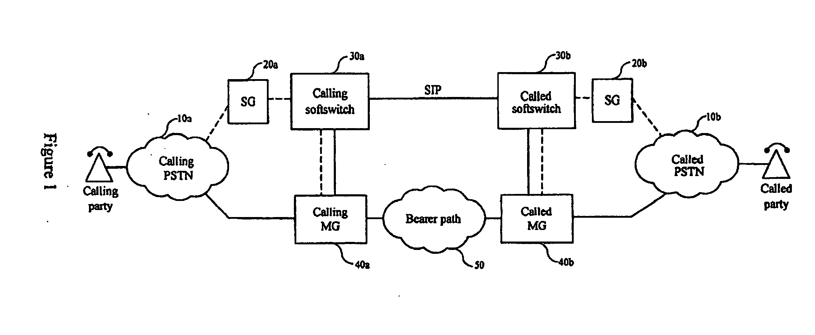

Figure 1 shows a network structure for overlap sending based on SIP. In Figure 1, when receiving a call setup request from a calling Public Switched Telephone Network (PSTN) 10a, a calling softswitch 30a sends a SIP message to a called softswitch 30b, requesting to set up a call with a called PSTN 10b The calling softswitch 30a and the called softswitch 30b control the connection and release of a bearer path 50 between a calling MG 40a and a called MG 40b. The ISUP signaling of the calling and called PSTN networks support overlap sending. In other words, the digits of a called number are sent through a few separate messages. This requires the intermediate NGN to support overlap sending so that the called number can be transmitted to the called PSTN quickly and accurately.

The relevant standards of SIP define two modes of overlapped sending.

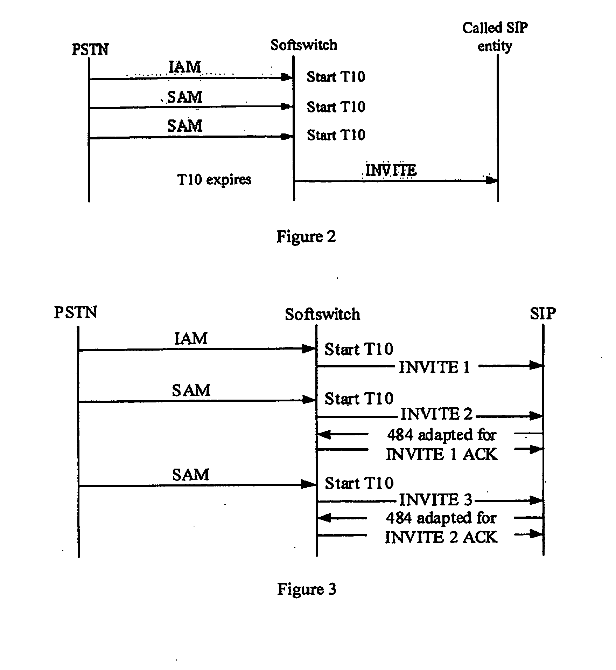

The first is the Enbloc mode. This mode is also called "pseudo Enbloc" mode. Figure 2 shows a call process of the Enbloc mode in RFC3578. It shows the process of using T10 to convert the Overlap signaling into the Enbloc mode. As shown in Figure 2, without knowing whether the called number reaches the possible maximum number length, the softswitch starts the timer T10 to wait for subsequent digits. After a timeout occurs or the called number reaches the possible maximum number length, the softswitch originates a call to the called office, and sends all the received numbers to the called office at one time. Nevertheless, when the softswitch acts as a calling office or tandem office, it may be unable to know the true length of the called number, or the true length of the called number may change due to number upgrade of the called party. When the softswitch does not know the true length of the called number, it needs to rely on the timeout of the timer, whereupon it converts signaling into the Enbloc mode and originates a call to the called office. This leads to a low speed of connection. Moreover, if the user dials a number slowly and a timeout occurs, the call may fail. In fact, the Enbloc mode does not realize "overlapped sending" really.

The second is the Overlap mode. Figure 3 shows a call processflow of the Overlap mode in RFC3578. As shown in Figure 3, a softswitch receives a called number request. In this case, if the softswitch can identify the called softswitch according to the obtained called number, the softswitch sends an INVITE request to the called softswitch promptly to set up a call. If new digits are received later, the softswitch needs to send a new INVITE request to the called softswitch. The new INVITE request carries all newest digits of the called number. After receiving the first INVITE message, the called softswitch rejects the call through an 484 failure response message if it is unable to route the call. Otherwise, it routes the call to the next network node. If the called softswitch receives a new INVITE message before receiving a message like ACM from the backward office, but the new INVITE message carries more digits of the called number than the previous INVITE message, the called softswitch needs to implement the first INVITE transaction processflow through 484, and send the new called number to the next node through a message like SAM.

The standards of the IETF and the SIP-1 specifications (Q.1912.5) of the ITU-T use multiple INVITE messages to solve the problem of overlap sending based on SIP. However, multiple INVITE messages may trigger the call setup process repeatedly, trigger the network device routing process repeatedly, and trigger the relevant SIP entities to handle important signaling information such as SIP-T and Session Description Protocol (SDP) repeatedly. Moreover, all SIP devices handle the INVITE message meticulously and inefficiently. Therefore, the implementation mode is highly complicated and very inefficient. This mode makes it difficult to solve major problems on the existing network in a short time.

In a word, the two solutions in the prior art are defective.

In the first solution, the Enbloc mode starts a timer to wait for subsequent digits, which slows down the connection. In addition, the digits may be received incompletely upon timeout of the timer, and the call has to be released due to incompleteness of the called number. In the second solution, multiple INVITE messages increase network load, and may lead to divergence of proxy routing.

In document US 2003/007483 A1, a call set-up method using SIP-T overlap signaling is disclosed. In the method, rather than waiting for receiving every digit of a called number dialed by a caller, when digits capable of a number translation are received, a bare channel connection is immediately performed so that a delay in transmission of a ring back tone can be prevented.

In document XP - 002528629, Mapping of Integrated Services Digital Network (ISDN) User Part (ISUP) Overlap Signaling to the Session Initiation Protocol (SIP) is disclosed. The document describers a way to map Integrated Services Digital Network (ISDN) User Part (ISUP) Overlap Signaling to the Session Initiation Protocol (SIP).

### Summary of the Invention

The present invention provides a method and apparatus for controlling sessions in order to overcome the foregoing problems.

RFC2976 extends a SIP method to transmit all kinds of information between participants in a session. The schemes of the present invention are implemented through an overlap sending based on SIP.

According to the first aspect, the present invention provides a method for overlap sending based on SIP, including: sending at least a part of digits of a called number to a call server through an INVITE message; receiving a call progress response message indicating that the called number is incomplete from the call server; and sending, the subsequently received digits of the called number to the call server through an INFO message according to the call progress response message.

According to the second aspect, the present invention provides a communication system for overlap sending based on SIP, including: a SIP entity and a call server. the SIP entity is adapted to send at least a part of digits of a called number to the call server through an INVITE message and the subsequently received digits of the called number to the call server through an INFO message upon receiving a call progress response message from the call server indicating the called number is incomplete; and the call server is adapted to send the call progress response message to the SIP entity when the called number from the SIP entity is incomplete according to the INVITE message.

According to the third aspect, the present invention provides a SIP entity, including: an apparatus adapted to send at least a part of digits of a called number to a call server through an INVITE message; and an apparatus adapted to send the subsequently received digits of the called number to the call server through an INFO message upon receiving a call progress response message indicating the called number is incomplete from the call server.

In the embodiments of the present invention, the SIP entity may be a SIP terminal.

Besides, the SIP entity may be another call server, and the digits of the called number are received from a calling network or an MGCP terminal. Here, the calling network may be a PSTN. In the case that the SIP-T or SIP-1 protocol is applied between the call server and the another call server, preferably, the another call server combines all latest digits in multiple unsent SAM messages into one SAM message, and encapsulates them into an INFO message for sending. In the case that the SIP-T or SIP-1 protocol is applied between the call server and the another call server, preferably, when the subsequent digits carried in the extended header field, the extended message body or the Request-URI of the INFO message conflict with the digits encapsulated in the SAM message, the call server prefers the digits encapsulated in the SAM message.

The call server may send the called number to the called network and the called network may be a PSTN.

In the present invention, the call progress response message indicates incompleteness of the called number through an extended header field or by adding a tag. The preferred call progress response message is a 183 message. The 183 message may indicate incompleteness of the called number by carrying no message body. Meanwhile, the 183 message may set up an early dialog, thus setting necessary conditions for sending subsequent messages.

Preferably, the call progress response message carries a contact parameter.

Preferably, the subsequently received digits of the called number are sent to the call server through an INFO message, and the INFO message contains a Cseq header field, which increases with the quantity of request messages sent by said another call server.

Preferably, the subsequent latest digits are carried in the extended header field, the message body or the Request-URI of the INFO message.

The solution provided by the present invention speeds up the connection, improves the call success ratio, consumes fewer resources, and prevents multiple INVITE messages from causing divergent routes.

### Brief Description of the Drawings

The present invention is described in detail by reference to the following drawings, in which:
Figure 1 shows a network structure for overlap sending based on SIP;
Figure 2 shows a call process of the Enbloc mode in RFC3578;
Figure 3 shows a call process of the Overlap mode in RFC3578;
Figure 4 shows the process of overlap sending based on SIP through an INFO message in an embodiment of the invention;
Figure 5 is an example of the 183 message;
Figure 6A is an example of the INFO message sent by softswitch-A a applying the mode of extending message header field;
Figure 7B is an example of the INFO message sent by softswitch-A applying the mode of extending message body field;
Figure 8C is an example of the INFO message sent by softswitch-A applying the mode of carrying by a Request-URI; and
Figure 9 shows a flow of overlap sending when a SIP terminal makes a call to a PSTN through a softswitch.

### Detailed Description of the Invention

The present invention is described through some exemplary embodiments. In an embodiment of the invention, the interactive process of overlap sending between SIP and ISUP is taken as an example to illustrate a tandem call between SIP trunks that support overlap sending. Suppose a PSTN1 calling user dials 075528781234, which is sent in several messages (IAM/SAM...) separately.

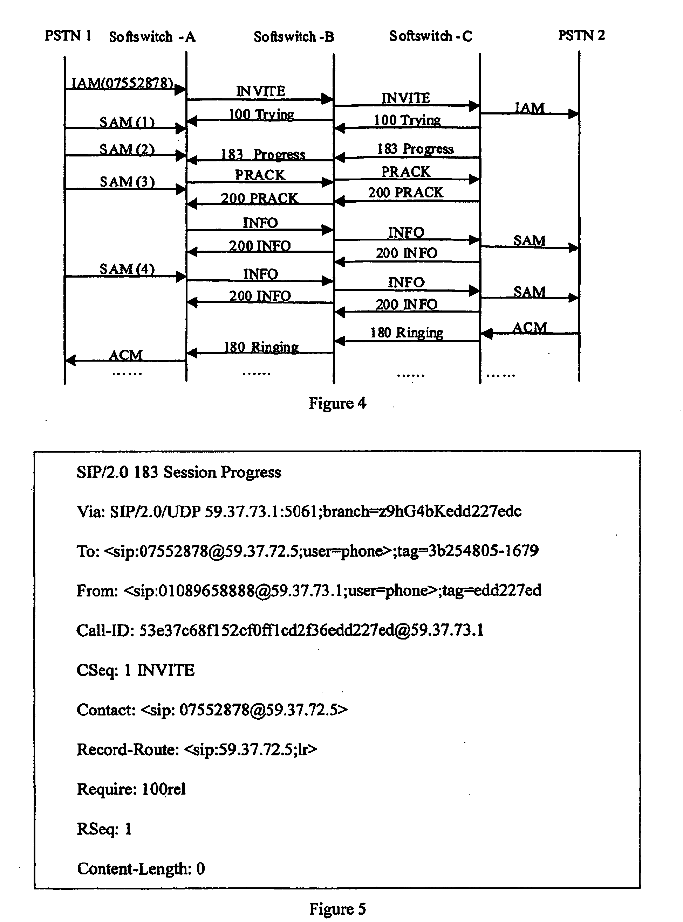

Figure 4 shows a process of sending digits in an overlapped way based on SIP through an INFO message in an embodiment of the invention.

In Figure 4, the PSTN 1 originates a call through an IAM message to invite a called user on the PSTN2 side, such as, 075528781234, to join a session. The IAM message carries a part of the called number, such as, 07552878.

Softswitch-A acts as a calling office for overlap sending through a SIP trunk. After receiving the IAM message from the PSTN1, softswitch-A selects a route according to analysis of the called number, routes the call out of the office through a SIP trunk, and sends an INVITE call request to softswitch-B. The Request-URI field of the INVITE message and the User part of the To field carry a part of the called number 07552878. The Request-URI indicates the current address of the called user, and the To field indicates the permanent address of the called user. For mobility or other reasons, the current address of the user may differ from the permanent address. In the process of sending the request message, the proxy server may change the Request-URI according to the location query result, but the To field remains unchanged all the time.

Sottswitch-B acts as a tandem office of the SIP trunk. It only needs to support transparent transmission of the message in the overlap sending process, and does not need to convert protocol. In the actual networking, the tandem office is optional. If softswitch-B does not exist in the figure, a call process of overlap sending supported by an inter-office SIP trunk. The softswitch-B is to indicate the tandem office softswitch supporting overlap sending at the SIP trunk. Softswitch-B differs from softswitch-A and softswitch-C only in that: the 183 message cannot be sent to the calling office until a 1 × × message (for example, 183 message) is received from the backward office, and the 183 response message cannot be sent on its initiative.

Softswitch-C acts as a called office for overlap sending through a SIP trunk. After receiving an INVITE call request, softswitch-C routes the call to the PSTN2 network through ISUP according to the called number 07552878 carried in the message.

If softswitch-C knows that the called number is incomplete after analyzing the number, for example, the called number is shorter than the maximum number length, softswitch-C sends a 183 response to the calling office without carrying any message body, to set up an early dialog. Figure 5 is an example of the 183 message.

According to the SIP protocol, softswitch-A cannot send an INFO request message until an early dialog is set up between softswitch-A and softswitch-C. In the protocol, any call progress response message 1XX, such as, 180 Ringing, 181 Call Is Being Forwarded, 182 Queued and 183 Session Progress, can set up an early dialog to allow transmission of subsequent INFO messages. Such messages may be treated specially by extending a special header field, for example, adding a tag, to indicate subsequent overlap sending . The 183 message is taken as an example for describing the embodiments of the invention. In the foregoing embodiment of the invention, the 183 message carries no message body, including SDP or ISUP, thus indicating the request for starting OVERLAP In a substitute embodiment, special tags such as extended header field and extended message body may also be added in the 183 message to indicate incompleteness of the called number and waiting for the calling office to send subsequent digits.

In an exemplary embodiment, the To field of the 183 message carries a tag parameter. The To field in the backward response message from the called office carries a tag parameter indicating that an initial dialog is set up between the calling party and the called party. In all subsequent messages of the dialog, the tag parameter value of the To field needs to keep unchanged. Another function of the tag parameter is that, when the proxy server forwards requests concurrently to multiple destinations, each destination generates a different tag parameter value so that the proxy server can identify the destination from which the response comes.

Preferably, the 183 message carries a Contact parameter, adapted to carry the contact address information of the called office. The Contact parameter indicates the contact address in the subsequent request messages (for example, INFO) in the process of receiving the call. With this Contact parameter, the subsequent messages such as INFO can be sent to this address directly. For example, when softswitch-B transmits a 183 message to softswitch-A transparently, if the Contact field carries the address of softswitch-C, the subsequent request messages such as INFO sent from softswich-A may bypass the intermediate tandem office - softswitch-B and arrive at softswitch-C directly. In addition, in an exemplary embodiment of the invention, the Provisional Response ACKnowledgement (PRACK) and the 200 PRACK handshake processes are used to ensure reliable transmission of the 183 message.

In addition" if the INVITE message carries a Record-Route field, the 183 message copies this field. The Record-Route field is inserted by the proxy server as required at the time of forwarding an INVITE message so that the value of the Record-Route field is set as the address of the proxy server.

After receiving the subsequent digits of the called number, the PSTN1 sends them to softswitch-A in a SAM message. As shown in Figure 4, the four SAM messages sent by PSTN1 subsequently carry four digits: 1, 2, 3 and 4 respectively.

Afterward, softswitch-A receives the subsequent digits of the called numbers carried in the SAM messages. Softswitch-A sends an INFO request message to softswitch-B after it receives a 183 message without any message body from the called office, a dialog is set up successfully and the PRACK process is finished, that is, the 200 response message for PRACK is received. This INFO message carries all the latest digits received subsequently. The Cseq header field of the INFO message increases according to the quantity of the request messages sent by softswitch-A. Cseq is a command sequence number field that identifies a command in the same call control sequence. For example, the Cseq value of the first INFO message sent by softswitch-A is 1, the Cseq value of the second INFO message is 2, and so on.

As shown in Figure 4, softswitch-A receives three SAM messages before sending the first INFO message, so all the latest digits that need to be carried by the INFO message are 123.

The INFO message carries the subsequent latest digits in its extended header field, extended INFO message body or the Request-URI.

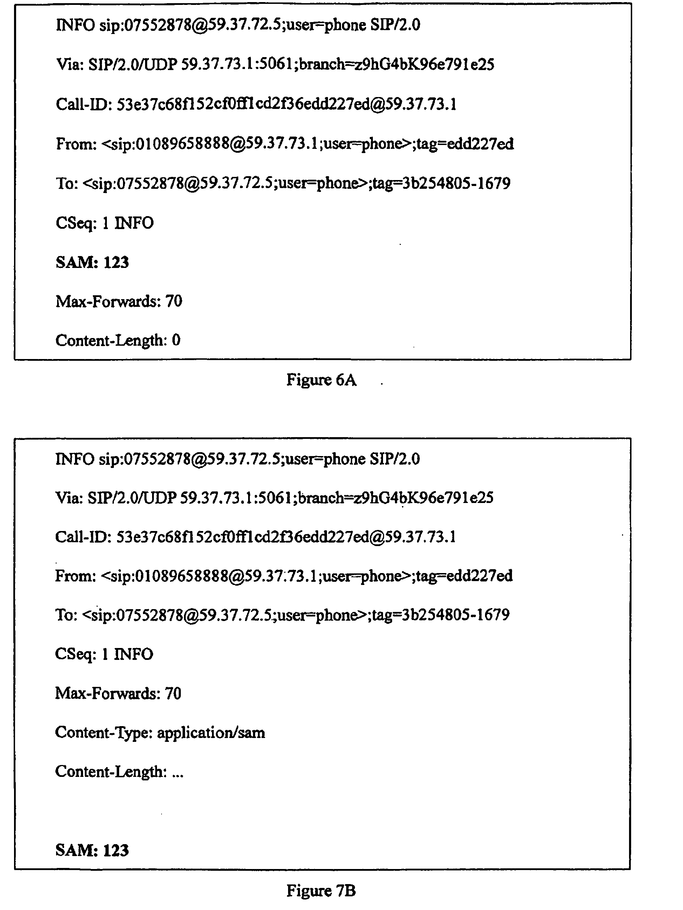

When the INFO message carries the subsequent latest digits in its extended header field, the message header field may be defined through syntax of the ABNF format as: SAM = "SAM" HCOLON 1*DIGIT. Figure 6A is an example of the first INFO message sent by softswitch-A where digits are carried in an extended message header field.

The INFO message may also carry the subsequent digits by extending the INFO message body. Figure 7B is an example of the first INFO message sent by softswitch-A where digits are carried in an extended message body.

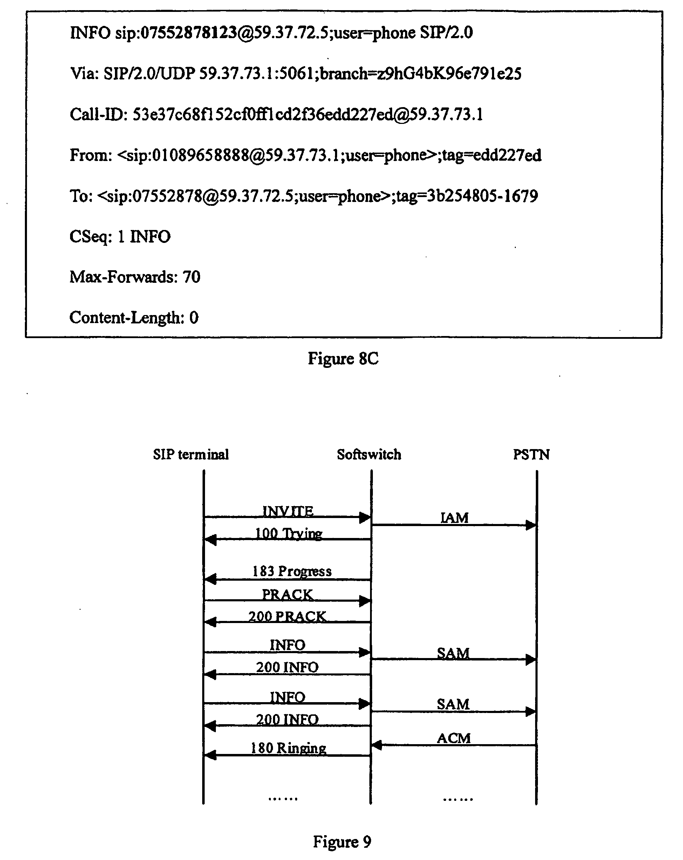

If the latest digits are carried in the Request-URI, the Request-URI contains all digits received currently, including the initial digit and all subsequent digits received. Figure 8C is an example of the first INFO message sent by softswitch-A where digits are carried in a Request-URI.

As a tandem office of the SIP trunk, sofrswitch-B continues to transmit the INFO message and the 200 message transparently between the calling office and the called office.

If softswitch-A receives a new SAM message after sending the INFO message, the subsequent digits are carried in the next INFO message. In Figure 4, the second INFO message carries the last digit 4. To ensure the reliability of INFO messages sent between offices and the sequence of the carried digits, the softswitch sends the next INFO message only after receiving a 200 response for the previous INFO message.

After receiving subsequent digits of the called number through INFO messages, softswitch-C continues handling the call according to the latest digits of the called number, for example, sending a SAM message through ISUP to transmit the called number. After receiving an ACM message from the called office, softswitch-C sends a 180 Ringing message to the calling office, and the calling user hears the ring back tone. The process of overlapped sending is finished.

With respect to reliable transmission, of 1XX provisional response messages (for example, 180 Ringing and 183 Session Progress) in SIP, see RFC3262 - Reliability of Provisional Responses in the Session Initiation Protocol (SIP).

In another embodiment of the invention, if the SIP-T/SIP-I protocol is applied between softswitches, an INFO message may carry digits by encapsulating a SAM message. If the softswitch receives multiple non-forwarded SAM messages before sending an INFO message, it preferably combines all latest digits in the multiple SAM messages into one SAM message, and encapsulates them into an INFO message, which is sent in a mechanism described above. In the case of SIP-T/SIP-I, if the subsequent digits carried in the extended header field, the extended message body or the Request-URI of the INFO message conflict with the digits encapsulated in the SAM message, the digits encapsulated in the SAM message shall prevail.

As a standard SIP message, the INFO message follows the path of the previous INVITE message, without consuming too many resources or causing divergent routes for multiple INVITE messages.

The SIP-based overlapped sending process mentioned above means overlap sending on the network side, namely, between softswitches. As an end-to-end protocol, the SIP protocol also supports overlap sending on the user side, namely, between a terminal user and a softswitch. When calling the called user, the softswitch must have received all digits of the called number. Therefore, overlap sending never occurs on the called user side. The following describes overlap sending supported on the calling user side.

Figure 9 shows a process of sending digits in an overlapped way when a SIP terminal makes a call to a PSTN through a softswitch. Due to end-to-end features of the SIP protocol, the overlap sending process on the SIP user side is the same as the overlap sending process on the network side. The SIP terminal must be capable of handling special messages such as 183 messages, setting up an early dialog, and sending subsequent digits through an INFO message. The overlap sending process is roughly the same as the process shown in Figure 4, and is not described further. In addition, the SIP-T/SIP-I protocol is not applicable to the user side. That is, in the overlapped sending on the calling user side, the INFO message never carries digits by encapsulating a SAM message.

In a word, the SIP-based overlap sending in the present invention is applicable to (but without limitation to) the following networking scenarios:
(1) The SIP/SIP-I/SIP-T trunk supports interaction with the ISUP trunk in overlap sending;
(2) In an overlap sending process between a SIP calling terminal and a softswitch, the called user side may be an ISUP trunk or a SIP/SIP-I/SIP-T trunk;
(3) The overlap sending process of the calling user terminal based on the Media Gateway Control Protocol (MGCP) is mapped to the SIP/SIP-I/SIP-T trunk.

Nevertheless, the messages used for overlap sending are not limited to INFO messages. The subsequent digits may also be sent through other SIP messages such as MESSAGE. In an embodiment of the invention, the INFO message is preferred.

Moreover, the above description takes a softswitch as an example, and the foregoing softswitch may be replaced by a call server. The call server may belong to an NGN or an IMS network. That is because the present invention is also applicable to overlap sending of digits in the IMS network although the invention is intended for an NGN.

It is apparent that those skilled in the art can make various modifications and variations to the present invention without departing from the scope of the present invention. The present invention is intended to cover these modifications and variations provided that they fall in the scope of protection defined by the following claims or their equivalents.

## Claims

1. A method for implementing overlap sending based on the Session Initiation Protocol (SIP), comprising:
sending at least a part of digits of a called number to a call server (30b) through an INVITE message;
**characterized in that** the method further comprises:
receiving a call progress response message indicating that the called number is incomplete from the call server (30b); and
sending the subsequently received digits of the called number to the call server (30b) through an INFO message according to the call progress response message.

2. The method of claim 1, **characterized by** further comprising:
setting the INFO message so that the subsequent latest digits are carried in an extended header field or message body or Request-URI.

3. The method of claim 1, **characterized by** further comprising:
sending, by the call server (30b), the digits of the called number to the called network (10b).

4. The method of claim 1, **characterized in that** the call progress response message indicates incompleteness of the called number by extending the header field or adding a tag.

5. The method of any of claims 1 to 4, **characterized in that** the call progress response message is a 183 message.

6. The method of claim 5, **characterized in that** the 183 message carries no message body.

7. The call setup method of claim 1, **characterized in that** the call progress response message carries a Contact parameter.

8. A communication system for overlap sending based on the Session Initiation Protocol (SIP), comprising a SIP entity (30a) and a call server (30b), the SIP entity (30a) is adapted to send at least a part of digits of a called number to the call server (30b) through an INVITE message, **characterized in that**:
the SIP entity (30a) is further adapted to send the subsequently received digits of the called number to the call server (30b) through an INFO message upon receiving a call progress response message from the call server (30b) indicating the called number is incomplete; and
the call server (30b) is adapted to send the call progress response message to the SIP entity (30a) when the called number from the SIP entity (30a) is incomplete according to the INVITE message.

9. The communication system of claim 8, **characterized in that** the SIP entity (30a) is a SIP terminal.

10. The communication system of claim 8, **characterized in that** the SIP entity (30a) is another call server and the called number is received from a calling network (10b).

11. The communication system of claim 8, **characterized in that** the SIP entity (30a) is another call server and the called number is received from an MGCP terminal.

12. The communication system of any of claims 8 to 11, wherein the call server (30b) is further adapted to extend the header field or add a tag to the call progress response message to indicate incompleteness of the called number.

13. A SIP entity (30a), comprising: an apparatus adapted to send at least a part of digits of a called number to a call server (30b) through an INVITE message; **characterized in that** the SIP entity (30a) further comprise:
an apparatus adapted to send the subsequently received digits of the called number to the call server (30b) through an INFO message upon receiving a call progress response message indicating the called number is incomplete from the call server (30b).

14. The SIP entity (30a) of claim 13, **characterized in that** the SIP entity (30a) is a SIP terminal or another call server.

## Patentansprüche

1. Verfahren zum Implementieren von überlappendem Senden auf der Basis des Session Initiation Protocol (SIP), das Folgendes umfasst:
Senden zumindest eines Teils von Ziffern einer angerufenen Nummer zu einem Anrufserver (30b) durch eine INVITE-Nachricht;
**dadurch gekennzeichnet, dass** das Verfahren ferner Folgendes umfasst:
Empfangen einer Anruffortschritts-Antwortnachricht, die angibt, dass die angerufene Nummer unvollständig ist, vom Anrufserver (30b); und
Senden der anschließend empfangenen Ziffern der angerufenen Nummer zum Anrufserver (30b) durch eine INFO-Nachricht gemäß der Anruffortschritts-Antwortnachricht.

2. Verfahren nach Anspruch 1, **dadurch gekennzeichnet, dass** es ferner Folgendes umfasst:
Festlegen der INFO-Nachricht so, dass die anschließenden letzten Ziffern in einem erweiterten Kopffeld oder Nachrichtenkörper oder Anforderungs-URI transportiert werden.

3. Verfahren nach Anspruch 1, **dadurch gekennzeichnet, dass** es ferner Folgendes umfasst:
Senden der Ziffern der angerufenen Nummer durch den Anrufserver (30b) zum angerufenen Netz (10b).

4. Verfahren nach Anspruch 1, **dadurch gekennzeichnet, dass** die Anruffortschritts-Antwortnachricht Unvollständigkeit der angerufenen Nummer durch Erweitern des Kopffeldes oder Hinzufügen eines Kennzeichens angibt.

5. Verfahren nach einem der Ansprüche 1 bis 4, **dadurch gekennzeichnet, dass** die Anruffortschritts-Antwortnachricht eine 183-Nachricht ist.

6. Verfahren nach Anspruch 5, **dadurch gekennzeichnet, dass** die 183-Nachricht keinen Nachrichtenkörper transportiert.

7. Anrufaufbauverfahren nach Anspruch 1, **dadurch gekennzeichnet, dass** die Anruffortschritts-Antwortnachricht einen Kontaktparameter transportiert.

8. Kommunikationssystem zum überlappenden Senden auf der Basis des Session Initiation Protocol (SIP) mit einer SIP-Entität (30a) und einem Anrufserver (30b), wobei die SIP-Entität (30a) dazu ausgelegt ist, zumindest einen Teil von Ziffern einer angerufenen Nummer zum Anrufserver (30b) durch eine INVITE-Nachricht zu senden, **dadurch gekennzeichnet, dass**:
die SIP-Entität (30a) ferner dazu ausgelegt ist, beim Empfangen einer Anruffortschritts-Antwortnachricht vom Anrufserver (30b), die angibt, dass die angerufene Nummer unvollständig ist, die anschließend empfangenen Ziffern der angerufenen Nummer zum Anrufserver (30b) durch eine INFO-Nachricht zu senden; und
der Anrufserver (30b) dazu ausgelegt ist, die Anruffortschritts-Antwortnachricht zur SIP-Entität (30a) zu senden, wenn die angerufene Nummer von der SIP-Entität (30a) gemäß der INVITE-Nachricht unvollständig ist.

9. Kommunikationssystem nach Anspruch 8, **dadurch gekennzeichnet, dass** die SIP-Entität (30a) ein SIP-Endgerät ist.

10. Kommunikationssystem nach Anspruch 8, **dadurch gekennzeichnet, dass** die SIP-Entität (30a) ein weiterer Anrufserver ist und die angerufene Nummer von einem anrufenden Netz (10b) empfangen wird.

11. Kommunikationssystem nach Anspruch 8, **dadurch gekennzeichnet, dass** die SIP-Entität (30a) ein weiterer Anrufserver ist und die angerufene Nummer von einem MGCP-Endgerät empfangen wird.

12. Kommunikationssystem nach einem der Ansprüche 8 bis 11, wobei der Anrufserver (30b) ferner dazu ausgelegt ist, das Kopffeld zu erweitern oder ein Kennzeichen zur Anruffortschritts-Antwortnachricht hinzuzufügen, um Unvollständigkeit der angerufenen Nummer anzugeben.

13. SIP-Entität (30a), die Folgendes umfasst: eine Vorrichtung, die dazu ausgelegt ist, zumindest einen Teil von Ziffern einer angerufenen Nummer zu einem Anrufserver (30b) durch eine INVITE-Nachricht zu senden; **dadurch gekennzeichnet, dass** die SIP-Entität (30a) ferner Folgendes umfasst:
eine Vorrichtung, die dazu ausgelegt ist, beim Empfangen einer Anruffortschritts-Antwortnachricht, die angibt, dass die angerufene Nummer unvollständig ist, vom Anrufserver (30b), die anschließend empfangenen Ziffern der angerufenen Nummer zum Anrufserver (30b) durch eine INFO-Nachricht zu senden.

14. SIP-Entität (30a) nach Anspruch 13, **dadurch gekennzeichnet, dass** die SIP-Entität (30a) ein SIP-Endgerät oder ein anderer Anrufserver ist.

## Revendications

1. Procédé de réalisation d'un envoi en chevauchement en fonction du Protocole de Lancement de Session (SIP), comprenant :
l'envoi à un serveur d'appels (30b) d'au moins une partie de chiffres d'un numéro appelé par le biais d'un message INVITE ;
**caractérisé en ce que** le procédé comprend en outre :
la réception depuis le serveur d'appels (30b) d'un message de réponse de progression d'appel indiquant que le numéro appelé est incomplet ; et
l'envoi au serveur d'appels (30b) des chiffres du numéro appelé reçus ultérieurement par le biais d'un message INFO en fonction du message de réponse de progression d'appel.

2. Procédé selon la revendication 1, **caractérisé en ce qu'**il comprend en outre :
le réglage du message INFO de telle sorte que les derniers chiffres ultérieurs soient acheminés dans un champ d'en-tête étendu ou un corps de message ou un URI de Requête.

3. Procédé selon la revendication 1, **caractérisé en ce qu'**il comprend en outre :
l'envoi, par le serveur d'appels (30b) au réseau appelé (10b), des chiffres du numéro appelé.

4. Procédé selon la revendication 1, **caractérisé en ce que** le message de réponse de progression d'appel indique la nature incomplète du numéro appelé en étendant le champ d'en-tête ou en ajoutant une balise.

5. Procédé selon l'une quelconque des revendications 1 à 4, **caractérisé en ce que** le message de réponse de progression d'appel est un message 183.

6. Procédé selon la revendication 5, **caractérisé en ce que** le message 183 ne porte aucun corps de message.

7. Procédé d'établissement d'appel selon la revendication 1, **caractérisé en ce que** le message de réponse de progression d'appel porte un paramètre de Contact.

8. Système de communication pour un envoi en chevauchement en fonction du Protocole de Lancement de Session (SIP), comprenant une entité SIP (30a) et un serveur d'appels (30b), l'entité SIP (30a) étant adaptée pour envoyer au serveur d'appels (30b) au moins une partie de chiffres d'un numéro appelé par le biais d'un message INVITE, **caractérisé en ce que** :
l'entité SIP (30a) est adaptée en outre pour envoyer au serveur d'appels (30b) les chiffres du numéro appelé reçus ultérieurement par le biais d'un message INFO à la réception d'un message de réponse de progression d'appel depuis le serveur d'appels (30b) indiquant que le numéro appelé est incomplet ; et
le serveur d'appels (30b) est adapté pour envoyer le message de réponse de progression d'appel à l'entité SIP (30a) quand le numéro appelé provenant de l'entité SIP (30a) est incomplet en fonction du message INVITE.

9. Système de communication selon la revendication 8, **caractérisé en ce que** l'entité SIP (30a) est un terminal SIP.

10. Système de communication selon la revendication 8, **caractérisé en ce que** l'entité SIP (30a) est un autre serveur d'appels et le numéro appelé est reçu d'un réseau appelant (10b).

11. Système de communication selon la revendication 8, **caractérisé en ce que** l'entité SIP (30a) est un autre serveur d'appels et le numéro appelé est reçu d'un terminal MGCP.

12. Système de communication selon l'une quelconque des revendications 8 à 11, dans lequel le serveur d'appels (30b) est adapté en outre pour étendre le champ d'en-tête ou ajouter une balise au message de réponse de progression d'appel pour indiquer la nature incomplète du numéro appelé.

13. Entité SIP (30a), comprenant : un appareil adapté pour envoyer au moins une partie de chiffres d'un numéro appelé à un serveur d'appels (30b) par le biais d'un message INVITE, **caractérisé en ce que** l'entité SIP (30a) comprend en outre :
un appareil adapté pour envoyer au serveur d'appels (30b) les chiffres du numéro appelé reçus ultérieurement par le biais d'un message INFO à la réception d'un message de réponse de progression d'appel depuis le serveur d'appels (30b) indiquant que le numéro appelé est incomplet.

14. Entité SIP (30a) selon la revendication 13, **caractérisée en ce que** l'entité SIP (30a) est un terminal SIP ou un autre serveur d'appels.
